# EUROPÄISCHE PATENTSCHRIFT

(11) **EP 0 599 280 B1**
(45) Veröffentlichungstag und Bekanntmachung des Hinweises auf die Patenterteilung: **13.08.1997**
(21) Anmeldenummer: 93118863.5
(22) Anmeldetag: 23.11.1993
(51) Int. Cl.: F16L 33/22, F16L 47/04

(54) **Schiebehülse und Klemmverbinder zum Verbinden von Rohren und Schläuchen aus polymeren Werkstoffen**
Sliding sleeve and clamping joint for the connection of pipes and hoses made of polymeric material
Manchon coulissant et raccord de serrage pour la connexion de tubes et tuyaux flexibles en matières polymères

(30) Priorität: 26.11.1992 DE 4239705
(43) Veröffentlichungstag der Anmeldung: 01.06.1994
(73) Patentinhaber: IVT Installations- und Verbindungstechnik GmbH & Co. KG, D-91126 Schwabach (DE)
(72) Erfinder: Hennig, Christoph, 91126 Svchwabach (DE)
(74) Vertreter: Patentanwälte Ruff, Beier, Schöndorf und Mütschele

(56) Entgegenhaltungen:
- DE-A- 3 608 843
- DE-C- 1 156 614
- DE-C- 3 813 815
- FR-A- 1 249 979
- FR-E- 81 254
- GB-A- 1 021 309
- GB-A- 1 034 622
- US-A- 4 293 147

## Beschreibung

Die Erfindung betrifft einen Klemmverbinder gemäß dem Oberbegriff von Anspruch 1, bestehend aus einer Schiebehülse und einem Fittinggrundkörper zum Festklemmen von Rohren und Schläuchen aus polymeren Werkstoffen, die insbesonders in der Trinkwasserversorgung in Gebäuden für Warm- und Kaltwasser, für Fußbodenheizungen und Heizkörperanschlußleitungen verwendet werden.

Der Stand der Technik ist in DE-PS 38 13 815, DE-PS 36 08 843 und US-PS 4 293 147 dargelegt und weist für Schiebe- oder Klemmhülsen glatte Innenflächen oder mit einseitig eingebrachten Hohlkehlen ausgeformte Innenkonturen auf. Mit diesen einseitig eingebrachten, umlaufenden Hohlkehlen wird bei senkrechter Verlegung zwischen Stockwerken, wie sie bei Verlegungen von Trinkwasserleitungen in Gebäuden häufig anzutreffen ist ein nach Beaufschlagen mit heißem Wasser und wieder Abkühlen der Leitung anzutreffendes Verrutschen der Schiebehülse und damit Undichtwerden der Leitung verhindert. Bei der Montage der Schiebehülse ist eine nach dem Stand der Technik einseitig angebrachte Hohlkehle nachteilig, da eine verkehrt aufgebrachte Schiebehülse zu einer undichten Verbindung führen kann. Durch die einseitig angebrachte Hohlkehle entstehen bei Montage der Schiebehülse von der falschen Seite übermäßige Kräfte, die zu einem Platzen oder Einreißen der Schiebehülse führen können.
Auch kann eine Schädigung des Montagewerkzeuges in der Weise erfolgen, daß eine weitere Montage nicht möglich ist. Hohe Kosten durch Baustellenstillstand, Reparatur, zusätzlichen Material- und Montageaufwand kann die Folge sein.

Hier setzt nun die Erfindung ein, die es sich zur Aufgabe gemacht hat, eine Verbesserung der nach dem Stand der Technik bestehenden Schiebehülsenverbindung dahingehend zu erreichen, daß die Schiebehülse beidseitig problemlos montierbar wird.

Erfindungsgemäß wird vorgeschlagen von beiden Hülsenenden ausgehend bis zur Mitte der Schiebehülse die gleiche Innenkontur umlaufend anzubringen. Einem konisch sich verengenden Bereich folgt ein konkaver, der in einer oder mehreren, den engsten Querschnitt der Hülsenöffnung bildenden Rippen in der Mitte der Hülse endet. Die Rippe in der Mitte der Hülse dient als Abstreifsicherung für die Hülse, die sonst keine Fixierung außer der Presspassung aufweist. Aus fertigungstechnischen Gründen kann der konische Bereich auch bis zur Mitte der Schiebehülse ausgebildet sein. Dies ist aber abhängig vom eingesetzten Werkstoff der Hülse. Mit dieser Rippe und der konisch sich verengenden oder kombiniert konisch/konkav sich verengenden Innenkontur der Schiebehülse ist sichergestellt, daß die notwendige Verschiebesicherung mit absoluter Montagesicherheit vereint wird. Aufwendige Schulungen der Monteure in der richtigen Montage der Hülse und umfangreiche Montagebeschreibungen können entfallen. Kosten werden deutlich reduziert.

Durch den konischen Anfangsbereich in der Schiebehülse, der sehr flach verläuft, bietet es sich an, den Bund des Fittings so zu gestalten, daß während der Montage die Schiebehülse auf den Bund oder eine davor befindliche Fläche aufgleitet und im Endzustand fluchtend mit dem Ende des Bundes oder dem Ende der vorgelagerten Fläche abschließt. Damit ist es möglich den Fittinggrundkörper wesentlich kleiner und kompakter als es sich aus dem Stand der Technik aus DE-PS 38 13 815 ergibt, auszuführen. Diese kleinere Ausführung des Fittings führt vom Materialeinsatz über die Herstellungskosten in allen Bereichen zu einer deutlichen Kostenreduzierung. Notwendige Festpunkte, wie sie beim Einbau eines Leitungssystems in Gebäuden notwendig sind, können direkt auf der Hülse aufgebracht werden, da durch das Aufgleiten der Hülse auf den Fittinggrundkörper eine direkte Kraftübertragung von der Festpunktschelle über die Hülse auf den Fitting erfolgt. Es können handelsübliche Schellen verwendet werden, die wesentlich kostengünstiger sind als Sonderanfertigungen, wie sie momentan verwendet werden.

Rohre und Schläuche aus polymeren Werkstoffen werden aus fertigungstechnischen und wirtschaftlichen Gründen nicht mit extrem eingeschränkten Toleranzen gefertigt, was zu unterschiedlichen Wanddicken im Querschnitt führt. Bei Wechseltemperaturbeanspruchung kommt es zusätzlich zu Querschnittsschwund durch Entspannung, so daß im Fittinggrundkörper mit Bund zusätzliche Hohlräume sinnvoll sind, die diese Volumenänderung aufnehmen können. Dadurch daß der Fittinggrundkörper mit Bund anschließend an die schräge Fläche zur Stützhülse hin zwei oder mehrere Stufen aufweist, kann dieser notwendige Hohlraum bereitgestellt werden. Das polymere Material wird entsprechend der Toleranzen bei Montage zunächst über die unterste Stufe, dann über die nächste Stufe und so weit fließen, bis die Hohlräume ausgefüllt sind oder kein überflüssiges Material mehr vorhanden ist. Die nach dem Stand der Technik zu montierenden Verbindungen entwickeln konstruktionsbedingt im letzten Montageabschnitt sehr hohe Kräfte, die durch fehlende Hohlräume bei ungünstiger Tolerierung hervorgerufen werden. Folge können Montagefehler, vorzeitiger Werkzeugverschleiß oder undichte Verbindungen sein. Diese Folgen treten bei Verwendung der vorgeschlagenen Hohlräume nicht auf. Zusätzliche Maßnahmen zur Optimierung der Verbindung wie nochmaliges Nachziehen, entfallen. Wartungskosten, die nach kurzer Zeit in Zusammenhang mit der Überprüfung der Funktionssicherheit entstehen würden, entfallen ebenso.

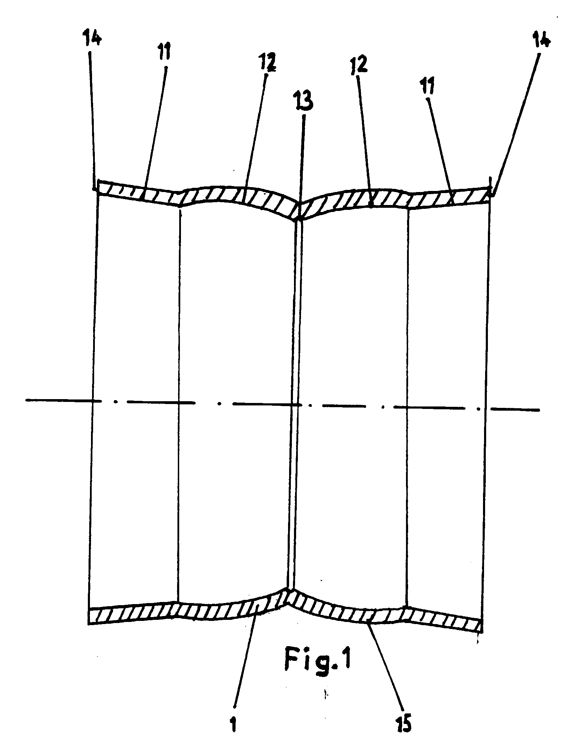

In Fig. 1 ist der Querschnitt durch eine Schiebehülse 1 dargestellt. Dem konischen Bereich 11 folgt ein konkaver Abschnitt 12 der in der Mitte der Hülse eine Rippe 13 als Abstreifsicherung bildet. Die Außenkontur 15 der Hülse ist durch das verwendete Material und das Herstellungsverfahren bedingt. Das Montagewerkzeug setzt am jeweiligen äußeren Ende 14 der Hülse an, die eine entsprechende Mindestwandstärke besitzen muß.

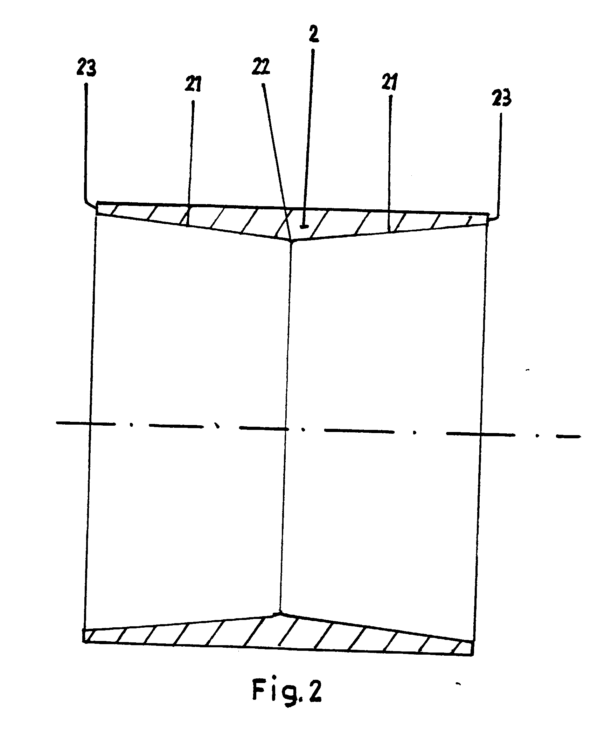

Fig. 2 zeigt eine Schiebehülse 2 mit konisch verlaufender Innenkontur 21 die beidseitig von der Hülsenöffnung her zur Mitte hin den Querschnitt der Hülsenöffnung verengt und in einer Rippe 22 endet. Die Mindestwandstärke der Hülse wird am jeweiligen Ende 23 der Hülse erreicht.

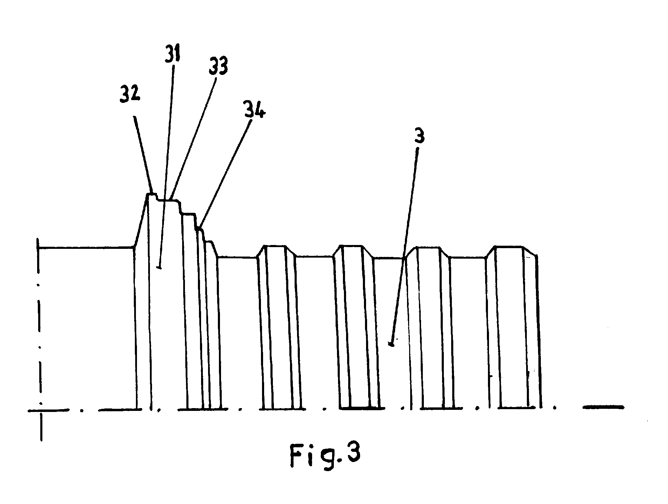

Fig. 3 stellt den Fittinggrundkörper 3 in halber Seitenansicht dar. Der Bund 31 besitzt einen Anschlag 32 dem eine schräge Fläche 33 vorgelagert ist auf den die Schiebehülse 2 oder 1 aufgleiten kann. Anschließend an die schräge Fläche 33 sind Stufen 34 mit unterschiedlicher Höhe und Tiefe angegliedert.

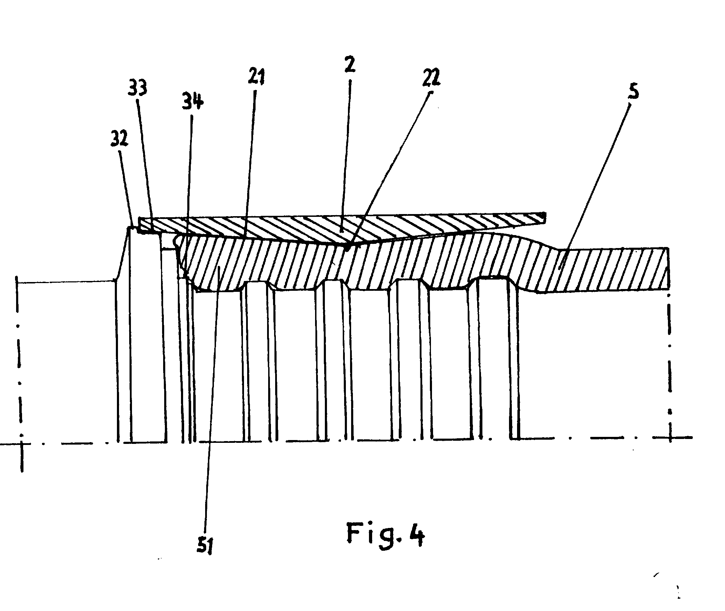

Fig. 4 zeigt, wie das Rohrmaterial 5 im vorderen Bereich der Verbindung die vorhandenen Räume an den Stufen 34 und von der Schiebehülse 2 mit dem überschüssigen Material 51 ausfüllt. Die Rippe 22 und die innenseitig als Doppelkonus ausgebildete Schiebehülse 2 verhindern das Abrutschen der Schiebehülse bei Beaufschlagung des Leitungssystems mit heißem Wasser und anschließendem Abkühlen. Die Verbindung bleibt dicht, da das Rohrmaterial in den Hohlräumen quasi eine Pufferzone besitzt.

## Patentansprüche

1. Klemmverbinder für Rohre und Schläuche aus polymeren Werkstoffen, bestehend aus einer Schiebehülse mit Innenkontur und einem Fittinggrundkörper, wobei dem Fittinggrundkörper ein Bund und daran anschließend eine zylindrische Stützhülse mit mehreren umlaufenden Rippen angeformt ist, auf die sich Rohr- und Schlauchenden mit aufgeweiteten Querschnitten aufstecken lassen und anschließend durch eine auf das Rohr oder den Schlauch aufgesteckte Schiebehülse kontrolliert verpressen lassen, wobei die von der Schiebehülse und vom Fittinggrundkörper mit angeformtem Bund und Stützhülse gebildeten Hohlräume durch das verpresste polymere Material ausgefüllt werden, dadurch gekennzeichnet, daß die Schiebehülse eine Innenkontur besitzt, die jeweils von beiden Hülsenenden ausgehend bis zur Mitte der Schiebehülse hin als konisch sich verengende oder kombiniert konisch/konvex sich verengende Bohrung ausgeführt ist und daß die Schiebehülse in der Mitte innen umlaufend eine oder mehrere Rippen als Abstreifsicherung aufweist.

2. Klemmverbinder nach Anspruch 1.) dadurch gekennzeichnet, daß der Bund zur Stützhülse hin eine schräge Fläche aufweist oder daß dem Bund eine schräge Fläche vorgelagert ist und daß der Bund anschließend in zwei oder mehrere Stufen übergeht, die mit unterschiedlichen Stufenhöhen ausgebildet sind.

3. Klemmverbinder nach Anspruch 1.) dadurch gekennzeichnet, daß die Schiebehülse auf eine schräge Fläche des Bundes oder eine dem Bund vorgelagerten Fäche aufgleitet und mit dem Ende des Bundes abschließt, kurz vor dem Fuß des Bundes oder am Fuße des Bundes selbst endet.

## Claims

1. Clamping joint for pipes and hoses made from polymeric materials, comprising a sliding sleeve (1, 2) with inner contour and a fitting body (3), said fitting body having a flange (31) and following onto the latter a cylindrical support sleeve with several, all-round ribs, on which can be mounted the pipe and hose ends with widened cross-sections and can then be pressed in controlled manner by a sliding sleeve fitted onto the pipe or hose, the cavities formed by the sliding sleeve and the fitting body with shaped-on flange and support sleeve are filled by the pressed, polymeric material (5, 51), characterized in that the sliding sleeve has an inner contour, which is in the form of a conically tapering or combined conically/ concavely tapering bore fitted uniformly from both sleeve ends towards the sleeve centre and that in the centre inside the sliding sleeve has one or more all-round ribs (13, 22) to prevent stripping.

2. Clamping joint according to claim 1, characterized in that the flange has a sloping face (33) towards the support sleeve or that upstream of the flange is a sloping face and that the flange then passes into two or more steps (34), which are constructed with different step heights.

3. Clamping joint according to claim 1, characterized in that the sliding sleeve slides on a sloping face of the flange or a surface upstream of the flange and terminates with the end of the flange, just upstream of the foot of the flange or at the foot of the flange.

## Revendications

1. Raccord de serrage pour tubes et tuyaux flexibles en matières polymères, composé d'un manchon coulissant (1, 2) avec contour intérieur et d'un corps de raccord (3), un collet (31) et à la suite de celui-ci un manchon cylindrique de soutien comportant plusieurs nervures périphériques étant moulés sur le corps de raccord, sur lesquels on peut enficher les extrémités de section élargie de tubes et tuyaux flexibles et ensuite les presser de manière contrôlée à travers un manchon coulissant enfiché sur le tube ou le tuyau flexible, la matière polymère (5, 51) pressée remplissant les espaces creux formés par le manchon coulissant et le corps de raccord avec collet et manchon de soutien moulés, caractérisé en ce que le manchon coulissant possède un contour intérieur qui est appliqué symétriquement et est réalisé comme forage se rétrécissant de manière conique ou combinée conique/concave de chacune des extrémités du manchon vers le milieu du manchon coulissant et en ce que le manchon coulissant présente à sa partie médiane comme sécurité contre le glissement une ou plusieurs nervures (13, 22) courant à la périphérie intérieure.

2. Raccord de serrage suivant la revendication 1, caractérisé en ce que le collet présente une surface oblique (33) vers le manchon de support ou en ce qu'une surface oblique précède le collet et en ce que le collet se transforme ensuite en deux ou plusieurs marches (34) présentant des hauteurs de marche différentes.

3. Raccord de serrage suivant la revendication 1, caractérisé en ce que le manchon coulissant glisse sur une surface oblique du collet ou une surface oblique précédant le collet et se raccorde à la fin du collet, peu avant le pied du collet ou au pied du collet lui-même.
